# EUROPEAN PATENT SPECIFICATION

(11) **EP 2 755 904 B1**
(45) Date of publication and mention of the grant of the patent: **07.12.2016**
(21) Application number: 12780823.6
(22) Date of filing: 07.09.2012
(51) Int. Cl.: B65G 47/64, B65G 47/71, B65B 9/073, B65B 35/50, B65B 57/20, B65B 35/24, B65B 35/26, B65B 59/00, B65H 29/14

(54) **A METHOD FOR AUTOMATIC PACKAGING OF SANITARY ARTICLES, AND CORRESPONDING SYSTEM**
VERFAHREN ZUM AUTOMATISCHEN VERPACKEN VON SANITÄRARTIKELN UND ENTSPRECHENDES SYSTEM
PROCÉDÉ D'EMBALLAGE AUTOMATIQUE D'ARTICLES SANITAIRES ET SYSTÈME CORRESPONDANT

(30) Priority: 12.09.2011 IT TO20110809
(43) Date of publication of application: 23.07.2014
(73) Proprietor: Fameccanica.Data S.p.A., 65129 Pescara (IT)
(72) Inventor: PELAGATTI, Pietro, I-66020 Sambuceto di San Giovanni Teatino (Chieti) (IT)
(74) Representative: Bosotti, Luciano
(86) International application number: PCT/IB2012/054629
(87) International publication number: WO 2013/038310

(56) References cited:
- WO-A1-2006/095008
- WO-A2-2010/049869
- FR-A1- 2 798 370

## Description

### Technical field

The present description relates to techniques for handling sanitary articles.

Various embodiments may refer to techniques such as to imply selective deflection of sanitary articles that advance in a flow.

### Technological background

In the manufacture of sanitary products (such as, for example, absorbant articles like nappies, diapers, sanitary pads and similar products), and in particular in the packaging thereof, there may arise various requirements, which are frequently difficult to reconcile with one another.

The production lines for said articles tend, on the other hand, to operate at increasingly higher rates, with flows of articles being fed at rates that may reach 800 articles per minute, in the perspective of arriving at rates of the order of 1000 articles per minute and higher. To realize the amounts involved it is sufficient to note that a rate of 1000 articles per minute corresponds to a rate higher than 16 articles per second, such as to no longer enable the individual articles being fed to be distinguished (it should be recalled that the persistence of an image on the retina of the human eye is of the order of 1/32 of a second).

The sanitary articles are likewise required to be packaged, according to the sales channels and/or the specific requirements of use, in packages that differ from one another, in particular as regards the number of the articles included in the individual package.

For example, together with packages containing dozens of articles (for example, 20 articles), destined for wide distribution, there may exist packages containing a far smaller number of said articles, for example, five articles or less, if not even a single article: packages of this type may be, for example, destined for marketing through chemists, or else for use in particular conditions.

For example, the package containing a single article or a small number of articles (for example, less than 5 articles) may be suitable for use when travelling, whereas the large package (for example, of 20 articles) is suited for home use.

It should be possible to meet packaging requirements that are so different without having to resort, for example, to different lines, for instance, one for articles for "large" packages and one or more other lines for articles designed for "small" packages, possibly individual packages.

In this regard, yet other factors must be taken into account, such as for example:
- the total number of articles destined for small packages (which may constitute a "niche" market) may be much smaller than the total number of articles destined for large packages; and
- the packages (in particular, the small ones, but the same may also apply to large packages) may present according to different morphologies, e.g., single package, package with 2 articles, package with 5 articles, etc.

Similar problems are addressed in documents such as WO 2010/049869 A2 (in connection with e.g. soap bars) or FR 2 798 370 A1 (where an input flow of sanitary articles is split over two outputs).

### Object and summary

The object of the description is to illustrate a solution capable of responding to the requirements outlined above.

In various embodiments, said object is achieved thanks to a method having the characteristics recalled in claim 1. Various embodiments may also refer to a corresponding system.

The claims form an integral part of the technical teaching provided herein in relation to the invention.

### Brief description of drawings

The invention will now be described, purely by way of non-limiting example, with reference to the annexed figures, wherein:
- Figure 1 is a schematic illustration of an embodiment;
- Figure 2 is a schematic illustration of an embodiment;
- Figure 3 is a perspective view of the part of Figure 2 indicated by the arrow III of Figure 2;
- Figure 4 illustrates a device according to an embodiment;
- Figures 5 to 6 are further views of the device of the perspective view of Figure 4, viewed from different observation points; and
- Figure 7 is a perspective view of a device according to an embodiment.

### Detailed description

In the ensuing description various specific details are illustrated aimed at providing an in-depth understanding of the embodiments. The embodiments may be obtained without one or more of the specific details, or with other methods, components, materials, etc. In other cases, known structures, materials, or operations are not illustrated or described in detail so that the various aspects of the embodiments will not be obscured.

Reference to "an embodiment" or "one embodiment" in the framework of the present description is intended to indicate that a particular configuration, structure, or characteristic described in relation to the embodiment is included in at least one embodiment. Hence, phrases such as "in an embodiment" or "in one embodiment" that may be present in different points of the present description do not necessarily refer to one and the same embodiment. Furthermore, particular conformations, structures, or characteristics may be combined in any adequate way in one or more embodiments.

The references used herein are provided merely for convenience and hence do not define the sphere of protection or the scope of the embodiments.

The ensuing description regards, by way of example, embodiments of a method and of a system for packaging sanitary articles A, such as, for example, nappies, diapers, sanitary pads, and similar products.

In the embodiments exemplified herein, the articles are to be packaged:
- in packages of a first type I, such as, for example, a "large" package, containing, for example, 20 articles A; or else
- in packages of a second type II, such as, for example, a "small" package, containing, for example, 5 articles or less, possibly even just one article A.

The packages I and II are to be deemed as a whole known, as likewise the corresponding packaging stations designated, respectively, by C1 and C2. The specific characteristics of the packages I (for example, a box, a flow-pack of large dimensions, etc.) and of the packages II (for example, an envelope, a flow-pack, possibly of the type containing just one article A) are consequently not of specific importance for an understanding of the embodiments and their implementation. The same applies to the criteria and the modalities with which the articles A are inserted in said packages.

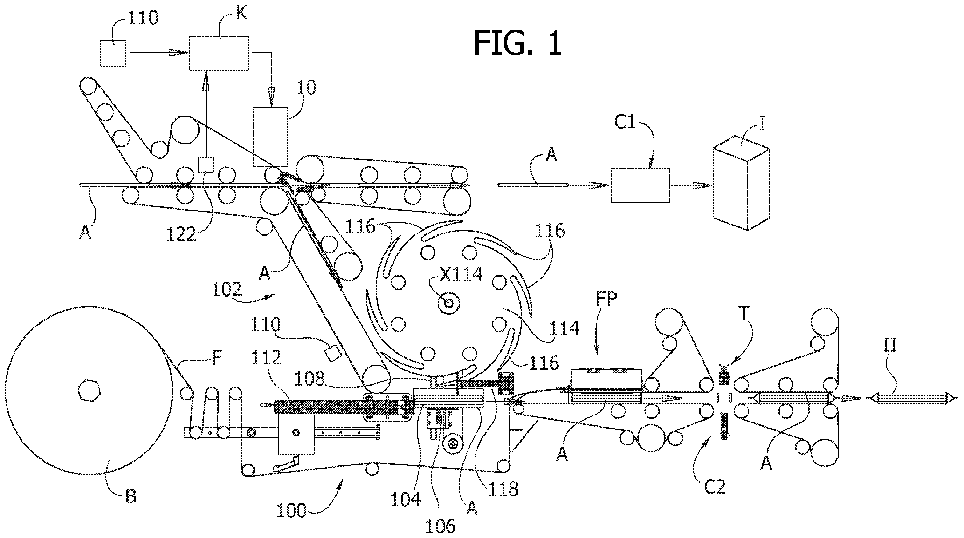

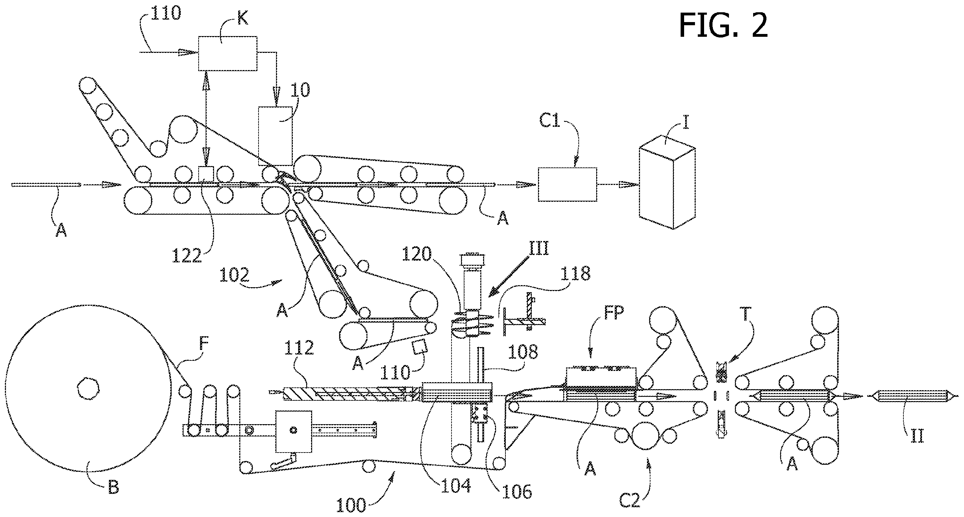

The destination of the articles A towards the packages I or else the packages II (i.e., towards the respective packaging stations C1 and C2) is determined by the intervention of a diverter device 10 that distributes the articles A (included in an incoming flow that will be assumed as arriving from the left-hand side of Figures 1 and 2 with a direction of feed from left to right) into two flows that are to feed, respectively, the packages I and the packages II.

In this regard, it is emphasized that:
- the method described in what follows with reference to the device 10 may be implemented with a diverter device of a different type from the embodiments considered herein,
   and, in a dual way,
- the device 10 according to the embodiments considered herein may be used also in methods and systems altogether different from the ones according to the embodiments considered herein.

For example, the device 10 may be used not only for "sorting" articles A on two (or possibly more) treatment (packaging) paths, but also in the context of methods and systems different from the ones considered herein, for example, for performing the function of discarding defective articles.

Once again by way of example, without this implying any limitation of the scope of the description, it will be assumed that the flow of incoming articles A in Figures 1 and 2 may present a rate of the order of 800 articles per minute and possibly a rate of the order of 1000 articles per minute or more.

It will likewise be assumed, once again by way of example, that the "small" packages designated by II, may include a small number of articles, for example, less than 10, or else, less than 5, or possibly just a single article. Again, even though this may of course be contemplated also for the "large" packages designated by I, various embodiments may envisage that the intensity of the flow of articles A sent towards the second packages II may change selectively over time, for example, because the number of articles included in the packages II changes. It is even possible to arrive at the situation where it is decided temporarily not to send articles towards the packages II and to send all the articles A towards the packages of the type designated by I. In this way, it is possible to take into account the fact that, in terms of total number of articles A packaged, the overall requirements of the packages II may be less, even by several orders of magnitude, than the homologous requirements of feed of the packages I.

As has already been said, whether the individual article A arriving at input to the system represented in Figures 1 and 2 is directed towards the packaging station C1 (packages I) or else towards the packaging station C2 (packages II) is determined by the intervention of the diverter device 10, which may be obtained according to the embodiments described more fully in what follows.

Once again, it is recalled that said type of device is suited, on the other hand, for being used also in the context of a plant and for purposes of application altogether different from the ones considered herein by way of example.

As has already been said, the packaging stations C1 and C2 that may be used in the framework of the system described herein are to be deemed known in the art and such as not to require a detailed description herein.

By way of example, the packaging station C2 may be configured for inserting the articles A coming from the diverter device 10 into packages formed starting from a sheet wrapping material F coming off a feed spool B. The wrapping material F is fed to a packaging machine FP of the type commonly referred to as "flow-pack" (also referred to as form-fill-seal or ffs), which inserts individual articles or stacks of articles A (formed as described more fully in what follows) in a length of continuous tubular wrapper formed starting from the sheet material F. The tubular length of sheet material containing inside it - at given distances apart - individual articles or stacks of articles A is then fed towards a sealing and transverse-cutting station T to give rise to the individual packages II.

Figures 1 and 2 illustrate two possible variant embodiments of a device that may be used for forming, downstream of the diverter device 10, stacks of articles A that are to be fed to the packaging machine FP. In either case, the device in question, designated by 100, receives the individual articles A deflected by the diverter device 10 onto a belt conveyor 102 (with outlet inclined downwards in the embodiment considered in Figure 1, oriented in the horizontal direction in the embodiment illustrated in Figure 2) and deposits them on a plate 104 moved by a motor drive 106 along a vertical guide 108.

Both in the example of Figure 1 and in the example of Figure 2 the plate 104 is subject to an alternating movement of controlled lowering and subsequent return to an initial raised position that envisages cyclic repetition of the following steps:
- initially the plate 104 is brought into a raised position so as to receive a first article A, that is to constitute the bottom article in a stack;
- the plate 104 is gradually lowered (with a continuous or stepwise movement) so as to receive subsequent articles A that pile up gradually on the plate 104 and are to be included in a stack;
- once the number of articles that are to be included in the individual package II has been reached (the number of articles arriving on the plate 104 may be counted, for example, by resorting to an optical sensor 110 connected to a control device K of the system described in what follows), the set of the articles A piled up on the plate 104 is fed towards the packaging machine FP by a pusher element 112; and
- the plate 104 thus freed from the stack of articles A previously formed thereon is bought back into the original raised position so as to be able to receive a new stack of articles.

Thanks to the action of counting performed, for example, via the sensor 110, the number of articles A included in the stack may hence be varied selectively, even operating in a dynamic way (i.e., forming successive packages II that include different numbers of articles A), and possibly be limited even just to one so that the packages II will each contain a single article.

Of course, in embodiments in which it is stably envisaged that the packages II contain a single article A the device for forming the stacks just described may be eliminated.

Whatever the mechanism of stacking adopted, in various embodiments there may be envisaged an action of dosing of the articles A arriving from the diverter device 10 in view of stacking thereof and subsequent feeding to the packaging machine FP.

Figure 2 regards embodiments in which the aforesaid action of dosing is performed by a "scythed" wheel rotating (in a counterclockwise direction, as viewed in Figure 1) about an axis X114.

The term "scythed wheel" takes into account the fact that provided on the perimeter of the wheel 114, for example at constant distances apart, are slots 116, each delimited, on the inner side, by the body of the wheel 114 and, on the outer side, by a tab.

The slots 116 open, so to speak, "backwards" with respect to the direction of rotation of the wheel 114, and the ideal cylindrical surface along which the tabs or blades defining the outer sides of the slots 116 extend is approximately tangential to the path of feed of the articles A by the conveyor 102.

In this way, the articles A coming from the diverter device 10 enter (one at a time, even though it is also possible to envisage - by adjusting the speed of rotation of the wheel 114 - that the individual slot 116 receives even more than one article A at a time) the slots 116, and are then laid down in a controlled way as a result of the rotation - whether continuous or stepwise - of the wheel 114 on the plate 104.

The movement of feed of the articles A (from left to right, as viewed in Figure 1) is stopped by a contrast element 118 located in such a way as to cause the articles A to be laid down on the plate 104 or on the articles A already piled up on said plate without presenting residual components of movement of feed from left to right.

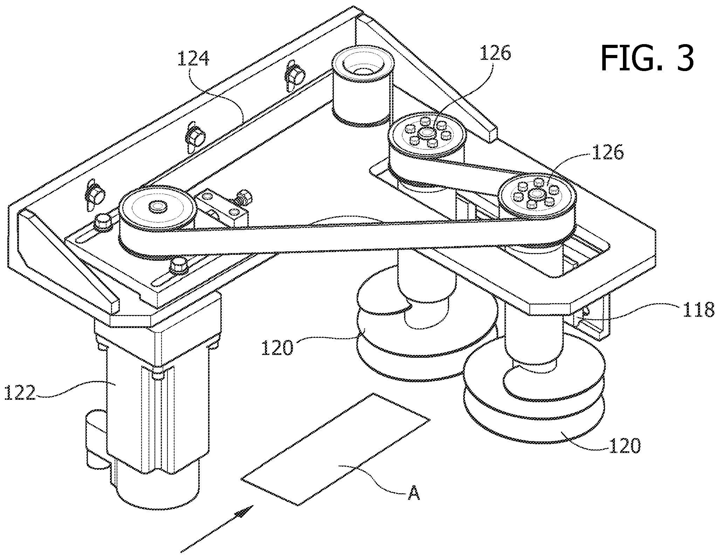

The embodiments referred to in Figure 2 and Figure 3 envisage that the aforesaid action of dosing of feed of the articles A towards the collection plate 104 is performed via two counter-rotating augers 120 set in front of the arrest element 118.

In various embodiments, in covering the ballistic trajectory that brings them to stop against the element 118, the articles A leaving the conveyor 102 (in a horizontal direction, in the example of embodiment illustrated in Figures 2 and 3) may thus then enter (see in particular Figure 3) the space included between the two augers 120.

The augers 120 in question have threads with opposite directions of winding and are driven in rotation in likewise opposite directions by a motor drive 122 constituted, for example, by an electric motor. In various embodiments, via a pulley mounted on its output shaft, the motor 122 may drive a belt 24 having opposite directions of winding on two pulleys 126, which in turn drive in rotation the shafts on which the augers 120 are mounted.

The directions of rotation of the augers 120 (in practice, the direction of rotation of the motor 122) and the directions of winding of the respective threads may be chosen in a co-ordinated way so as to cause the articles A coming from the conveyor 102 and inserted between the threads of the augers 120, as they come up against the element 118 to be gradually driven downwards so as to come to rest upon the plate 104 (or upon the articles that have already piled up on the plate itself).

In various embodiments, the operating principle of the solutions represented in Figures 1 to 3 may be summed up as follows:
- the aim is to package automatically products such as sanitary articles A in at least a first type of package (the packages I) and a second type of package (the packages II);
- the packages I and II differ, apart from other aspects that are not specifically of interest here, in that they contain, respectively, a first number of articles and a second number of articles, for example, with the first number of articles (even much) greater than the second number of articles, which may also be equal to unity; in various embodiments, the numbers of articles included in the packages may vary, for example, as regards the second number, during operation of the system;

- there is generated at input to the system a flow of articles A being fed (from left to right, as viewed in Figures 1 and 2);
- the articles A are fed towards a diverter device 10 that enables selective deflection of the incoming articles so as to produce, starting from the incoming flow, a main flow of non-deflected articles A that advance towards the packaging station C1 to give rise to the packages I and a flow of articles deflected (for example, onto the conveyor 102) that are, instead, sent to the packaging machine C2 to give rise to the packages II.

In various embodiments, the action of deflection may be obtained with a ratio between deflected articles (for the packages II) and non-deflected articles (for the packages I) that is a function of the ratio between the (second) number of articles contained in the packages II and the (first) number of articles contained in the packages I.

In various embodiments, the action of deflection may be obtained with a ratio between deflected articles (for the packages II) and non-deflected articles (for the packages I) that is simply equal to the ratio between the (second) number of articles contained in the packages II and the (first) number of articles contained in the packages I.

For example, assuming operating in a case where the packages I and the packages II contain, respectively, 20 articles and 3 articles, it is possible to intervene on the diverter device 10 in such a way that the diverter device 10 lets through, without deflecting them, 20 articles A in the main flow directed to the station C1 (packages I) and then deflects 3 articles A in sequence in the flow deflected towards the station C2 (packages II), and then returns to letting through 20 articles into the main flow, and so forth.

In various embodiments, this action of control of the diverter device 10 (whatever the specific modalities of embodiment of the diverter device itself) may be controlled by the processing unit K that superintends general operation of the system.

In various embodiments, such a processing unit may be constituted, for example, by a so-called "programmable-logic controller" (PLC) or by a personal computer (PC) for industrial use.

For example, in addition to receiving the output signal of the sensor 110 (that detects arrival of the articles A leaving the conveyor 102), the control unit K may be configured so as to detect the signal produced by a sensor 122 (for example, an optical sensor) that detects arrival of the articles A at the diverter device 10. Other modalities for detecting arrival of the articles A at the diverter device 10 are to be deemed well known in the art and such as not to require a specific description herein.

In various embodiments, the action of control of the diverter device 10 via the processing unit K may be exerted by detecting (in a way in itself known) the conditions of operation of the station C2. This is done by causing the action of "drawing-off" of the articles A of the incoming flow to be in effect controlled by the station C2 that is to form the "small" packages.

In various embodiments, assuming once again operating in a case where the packages I and the packages II contain, respectively, 20 articles and 3 articles, it is possible to govern the diverter device 10 so as to deflect towards the station C2 3 articles A one after another, and then let through towards the station C1 a number of articles equal to 20 x n (with n greater than 1) so as to be able to form n 20-article packages.

In various embodiments, the action of deflection may hence be made with a ratio between deflected articles (for the packages II) and non-deflected articles (for the packages I) equal to a multiple n (greater than one) of the ratio between the (second) number of articles contained in the packages II and the (first) number of articles contained in the packages I.

Operating in this way:
- the station C2 may be subject to less stringent constraints in terms of speed of operation: expressed in other words, the station C2 has all the time necessary to bring itself into the condition to receive the articles A and perform thereon the sequence of the packaging operations;
- there is the possibility of appropriately modulating the production of the two different types of packaging.

In various embodiments, the aforesaid action of deflection may be performed, as has been seen in the examples referred to above, by deflecting in succession a number of articles A towards the packages II.

At least in some embodiments, an action of deflection performed according to the modalities described previously (alternation of blocks of deflected articles and of blocks of non-deflected articles) might be exposed to critical factors linked to at least two aspects.

In the first place, the fact of deflecting, towards the derived flow sent towards the station C2, blocks of a number of articles causes in the main flow (that is to advance towards the station C1) creation of "gaps" of length equal to the overall length of the individual deflected block. Said length is a function of the sum of the lengths of the articles included in the block of deflected articles plus the extension of the intervals of separation between them. At least in some embodiments, recovering these gaps, preventing them from affecting operation of the packaging station C1, may require additional measures.

In the second place, an intervention of deflection of a number of articles one after another by the diverter device 10 (however performed) may require either successive interventions of deflection by the device 10 carried out one after another (at rather high rates of intervention: consider, by way of example, the rates of 800-1000 articles per minute mentioned previously) or else a single intervention of deflection for an interval the duration of which must be regulated according to the number of articles included in the block of articles deflected one after another, once again having each time to take into account, not only the number and the length of the articles included in the block of articles deflected one after another, but also the extension of the intervals of separation between them.

In various embodiments, it is possible to envisage that the intervention of deflection by the device 10 is made on individual articles, causing the diverter device 10, after deflecting a single article A towards the derived flow (i.e., towards the station C2 that forms the packages II, in the example considered herein), to let through again articles A in the main flow (i.e., towards the station C1 that forms the packages I, in the example considered herein).

The desired result of causing the ratio between the number of articles A deflected towards the station C2 (packages II) and the number of the articles that are not deflected and hence advance towards the station C1 (packages I) to be as a whole the desired one, which is a function of the ratio between the number of articles included in the packages II and the number of articles included in the packages I, may be achieved by governing (for example, via the control unit K) the device 10 in such a way that the individual articles A that the device 10 deflects towards the secondary flow are separated by a number of non-deflected articles (that hence advance towards the packages I) equal - at least on average - to the ratio between the (first) number of articles included in the packages I and the (second) number of articles included in the packages II.

By way of first example, consider a case where the packages of the first type I contain 20 articles A, whereas the packages of the second type II contain 2 articles.

In this case, in various embodiments, it will be possible to govern the diverter device 10 in such a way that it:
- deflects a single article A towards the secondary flow;
- then lets through 10 articles in the main flow;
- deflects again a single article towards the derived flow;
- then lets through again 10 articles in the main flow;
and so forth.

In this way, the individual articles deflected towards the derived flow are separated by a number of non-deflected articles equal to 10, thus ensuring the ratio 20/2 between the number of articles included in the packages I and the number of articles included in the packages II.

Now assume, by way of further example, that there arises the need to vary the number of articles included in the packages II to the value 3, continuing to keep for the packages I the number of 20 articles.

At this point, in various embodiments, it will be possible to govern the diverter device 10 in such a way that it operates cyclically in the following way:
- it deflects a single article A towards the secondary flow;
- it lets through 7 articles in the main flow;
- it again deflects a single article towards the derived flow;
- it again lets through 7 articles in the main flow;
- it once again deflects a single article A towards the secondary flow; and
- it then lets through, this time no longer 7, but 6 articles in the main flow.

The above sequence is then repeated cyclically so that, on average, every 3 articles deflected towards the derived flow (packages II), in the main flow (packages I) there travels a number of articles equal to 7 + 7 + 6 = 20.

In this way, the desired final ratio of 20:3 between the number of articles included in the packages I and the number of articles included in the packages II is ensured.

Of course, the aforesaid effect of compensation may on average be obtained with an extremely wide range of sequences, according to the desired final values.

In various embodiments, in the case where the ratio between the number of articles included in the first packages I and the number of the articles included in the second packages II is an integer, resorting to the aforesaid effect of compensation may on average not be necessary in so far as the distribution according to the desired ratio is formed automatically by causing the individual articles deflected towards the derived flow to be separated by a constant number of non-deflected articles.

For this reason, it was said previously that the device 10 may operate by deflecting towards the secondary flow individual articles separated by a number of non-deflected articles that is "at least" on average a function of the ratio between the (first) number of articles included in the packages I and the (second) number of articles included in the packages II.

It will likewise be appreciated that the "gaps" between the individual articles A deflected towards the derived flow (packages II) may be easily absorbed - for example, with the "scythed wheel" 114 or auger 120 devices described previously. They are in fact gaps with extension that is "at least" on average constant and, in any case, linked to a flow having an intensity that is lower (frequently much lower) than the rate of the incoming flow.

The examples considered herein show that, in various embodiments, it is possible to vary in real time, by simply changing the modalities of intervention of the diverter device 10, the ratio between the articles contained in the packages I and the articles contained in the packages II, so that it is possible to take into account, for example, the need to form also small lots of packages II containing different numbers of articles, keeping the number of articles included in the "large" packages I unaltered. On the other hand, it is possible, if necessary, to vary selectively and in real time also the number of articles included in the packages I.

In various embodiments, it is also possible to inhibit, at least temporarily, the operation of the diverter device 10 in such a way that all the articles of the incoming flow are kept in the main flow that is to feed the packages I, it thus being possible to take into account the fact that, in particular for certain sanitary articles, the overall need for articles packaged in the packages II may be as a whole less (even much less) than the need for articles packaged in the packages I.

Proceeding now to examine the characteristics of the device 10, it should once again be recalled that the device 10 exemplified herein may be used also in a context of application different from what is illustrated herein, for example, simply for deflecting or diverting out of a flow of incoming articles A articles that are detected as being defective.

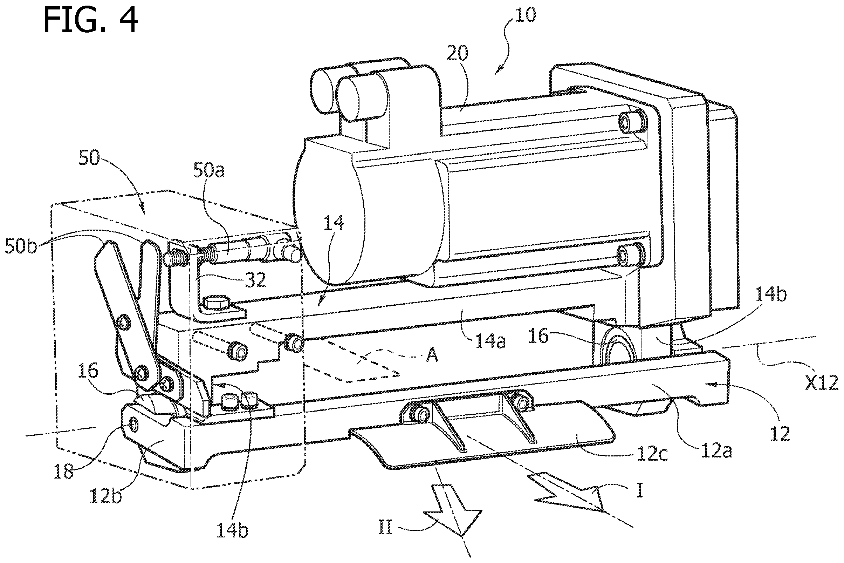

In various embodiments, the device 10 may include, as active element, that is to perform the function of deflection on the articles A, a bridge element (hence having in general an arched shape) that may be set straddling the path of feed of the articles A as schematically represented in Figure 4.

In this way the device may alternatively:
- allow the articles A to advance in a main flow without being deflected (see arrow I of Figure 4);
- deflect the articles A in a selective way (i.e., even one at a time), for example, to discard, from an incoming flow, articles A that have been found to be defective or else to send on part of the articles of the incoming flow towards a derived flow as exemplified in Figures 1 and 2.

It will be appreciated that the indications I and II appearing on the arrows of Figure 4 are linked to the fact that, in the examples of embodiment considered previously, the non-deflected articles are to be packaged in the packages I, whereas the deflected articles are to be packaged in the packages II.

In various embodiments, the deflector element 12 may present a core part 12a, constituted in the example of embodiment considered herein by a rectilinear bar, and two side parts 12b that complete the arched shape (like a bridge in the example of embodiment illustrated here) enabling installation of the deflector element 12 on a supporting structure designated as a whole by 14.

The structure 14 may in turn be mounted on the frame or framework of the plant in which the device 10 is included (for example, the plant exemplified in Figures 1 and 2).

In this regard, it will be appreciated that, in various embodiments, the device 10 has a configuration such as to enable installation thereof practically indifferently in two positions rotated through 180° with respect to a vertical axis, hence with the possibility of convenient installation both on "righthand" plants or machines and on "left-hand" plants or machines.

In various embodiments, in the portion that is to act on the articles A, the deflector element 12 carries, for example, at its core part 12a, for instance, in a central position, a blade part 12c that in the examples of embodiment considered herein, where it is envisaged that the flow of articles A passes underneath the device 10 (hence with the device 10 mounted above the path of feed of the articles A: it will be appreciated, on the other hand, that said arrangement of installation is not imperative in so far as the device 10 might be mounted, for example, underneath the path of feed of the articles A) has an overall tile-like configuration, hence curved with concavity facing downwards.

In various embodiments, this conformation may facilitate the action of deflection of the articles A enabling said action to be performed gradually (i.e., "gently"), without any risk of phenomena of sticking of the articles A.

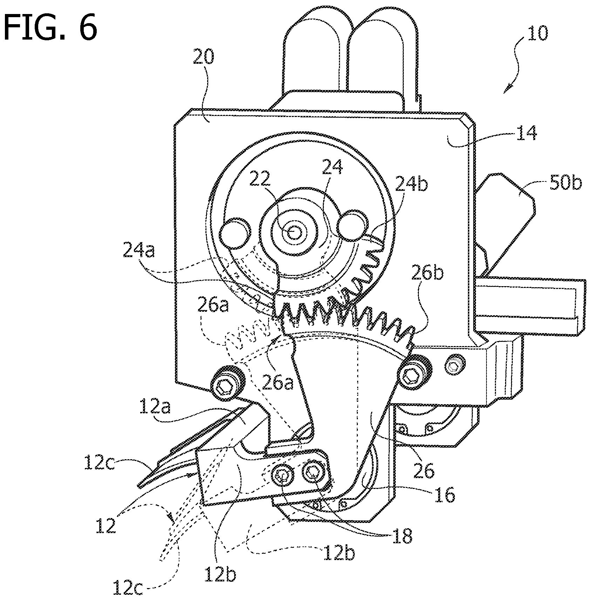

In various embodiments, the deflector element 12 may be mounted on the supporting structure 40 with the capacity of oscillating about an axis of oscillation X12 between:
- an inactive condition or position (the one represented with a solid line in the figures), where the deflector element 12 (for example, the blade 12c) does not interfere with the articles A, so that the incoming articles A flowing towards the device 10 are not deflected thereby; and
- an active position, represented with a dashed line in Figure 6, where, as a result of a movement of oscillation about the axis X12 (downwards, in the examples considered), the deflector element 12 (for example, the blade 12c) is brought into a position where it interferes with the path of feed of the articles A to perform the desired action of deflection.

In various embodiments, the oscillating (hinging) connection of the deflector element 12 to the structure 14 at the axis X12 is made at pins or blocks 16 rotatably mounted (for example, with interposition of low-friction bearings or elements) in corresponding seats of the supporting structure 14.

This solution, which is not imperative, presents the advantage of enabling removable installation of the deflector element 12 on said pins, for example, to enable convenient replacement of the deflector element 12 with an element having geometrical characteristics (for example, shapes and dimensions of the active parts) that differ according to the specific characteristics of the articles A that are to undergo the action of deflection.

For oscillating installation of the deflector element 12 on the structure 14 kinematic solutions of a different type may be used, for example, by providing pins projecting from the structure 14 that engage openings provided in the element 12.

Actuation of the deflector element 12 between the inactive condition and the active condition described previously may be implemented in the form of a motor 20, which may, for example, be an electric motor or a fluidic motor.

The kinematic coupling between the motor 20 and the deflector element 12 may be obtained according to different modalities.

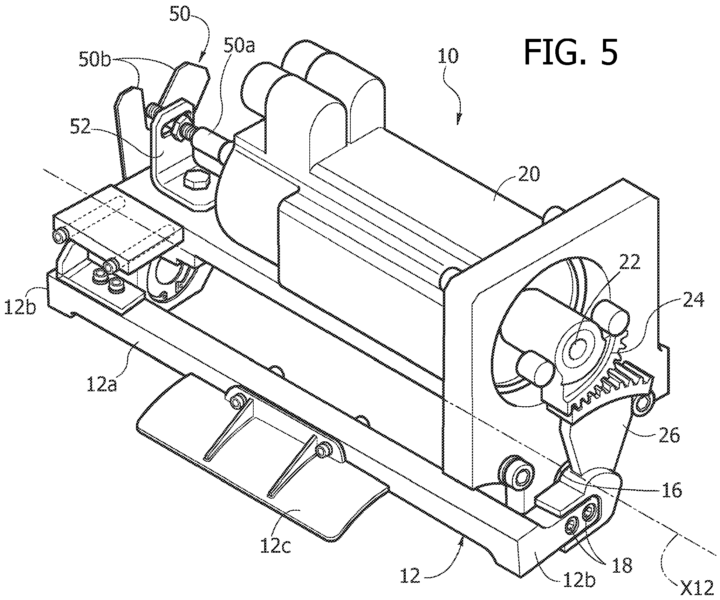

For instance, Figures 5 and 6 refer by way of example to an embodiment in which the aforesaid kinematic coupling envisages:
- a driving sector gear, designated by 24, fitted on the shaft 22 of the motor 20; and
- a driven sector gear 26 mounted on one of the pins 16 possibly (as schematically represented in the figures and more clearly visible in Figure 6) with a direct connection (see the appendage of the sector gear 26 connected to the deflector element 12), for example, at one of the side parts 12b thereof.

In various embodiments, the supporting structure 14 also presents a general arched conformation and may hence also present a core part 14a on which the motor 20 may be mounted and two side parts 14b, provided in which are the openings where the pins 16 that bear the ends of the deflector element 12 are rotatably mounted with the capacity of oscillating about the axis X12.

The sector gears 24 and 26 extend between respective ends 24a, 24b and, respectively, 26a, 26b.

As may be appreciated better in the view of Figure 6, in various embodiments, when the deflector element 12 is in its inactive condition (represented by a solid line) the two sector gears 24 and 26 mesh with one another at the first ends 24a, 26a.

When, as a result of driving performed by the motor 20, the shaft 22 turns (in the clockwise direction, as viewed in Figure 6), the sector gear 24 turns accordingly, inducing a movement (in an opposite, i.e., counterclockwise, direction as viewed in Figure 6) of the sector 26.

Said movement of oscillation of the sector 26 is at the basis of the movement of oscillation of the deflector element 12 towards its active position, where the sector gears 24, 26 mesh with one another at the opposite ends 24b and 26b.

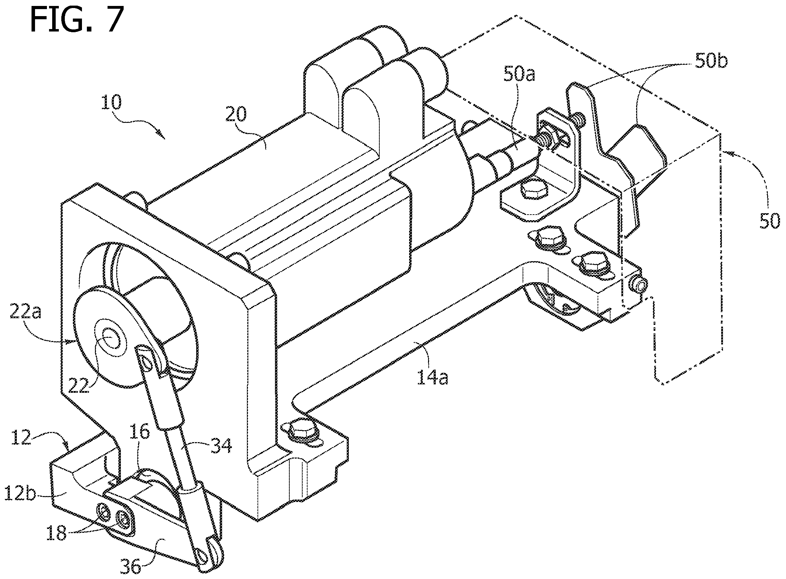

Figure 7 is a schematic illustration of another mode of kinematic coupling between the motor 20 and the deflector element 12.

In this case, the shaft 22 of the motor 20 terminates in a disk-shaped part 22a constituting in practice the crank part of a crank mechanism, the connecting-rod part of which includes a lever 34 coupled at its distal end to a further lever 36 fixed with respect to the deflector element 12.

In the embodiment exemplified herein, the lever 36 is a lever pivoted in one of the pins or blocks 16 rotatably mounted in the supporting structure 14 and carries, fixed (e.g., screwed) thereon, one of the side parts 12b of the element 12.

Other modes of kinematic coupling are of course possible.

In various embodiments, a target pursued may be that of making the device 10, in particular as regards its moving parts (deflector element 12 and corresponding drive devices) of materials with low inertia, considering the fact that the speed of intervention of the device 10 may be very high (for example, in the presence of a flow of articles A with a rate of 1000 articles per minute, the diverter device 10 is required to be capable of performing the action of deflection even on a single article, hence with an intervention time of the order of 1/16 of a second).

In various embodiments, the deflector element 12 may be obtained with a material with low inertia such as a material chosen, for example, from among aluminium, plastic, and fibre-reinforced materials.

Similar considerations may apply, for example, to the sector gears 24 and 26 and to the levers 34 and 36, as well as to the elements associated thereto (e.g., the shaft 22 of the motor 20).

In relation to the sector gears 24 and 26, it will be appreciated that they may be conceptually viewed as a "minimal" embodiment of a gearing arrangement including two gears, of which in the device 10 are represented in effect just the angular sectors that are to co-operate with one another in meshing as schematically represented in Figure 6.

Considerations of rapidity of intervention, and hence of low inertia may suggest, in various embodiments providing a sensor for detecting the position of the deflector element 12 made in the form of a contactless sensor.

For instance, in various embodiments, on the lateral part 12b of the deflector element opposite to the one on which the motor 20 acts (i.e., at the end opposite to the one on which the sector gears 24 and 26 or else the levers 34, 36 are located) there may be provided a contactless position sensor 50, which may include, in various embodiments:
- a probe (or sensor proper) of a capacitive type 50a carried by the structure 14, for example, via a bracket 52; and
- a mobile element 50b having a general V shape.

The mobile element 50b includes two lamellae rendered fixed with respect to the deflector element 12 in such a way that:
- when the deflector element 12 is in the inactive position, in front of the probe 50a there is one of the lamellae of the V; and
- when the deflector element 12 is in the active position, in front of the probe 50a there is the other one of the lamellae of the V.

In various embodiments, the probe 50a may be connected to the control unit K (Figures 1 and 2) so as to enable the control unit K to know at every moment the position in which the deflector element 12 is at that moment.

Without prejudice to the principle of the invention the details of construction and the embodiments may vary, even significantly, with respect to what is illustrated herein purely by way of non-limiting example, without thereby departing from the sphere of protection of the invention, said sphere of protection being defined by the annexed claims.

## Claims

1. A method of automatically packaging sanitary articles in packages of at least a first (I) and a second (II) type containing a first and a second number of articles (A), respectively, the method including:
- providing an input flow of said articles (A),
- diverting (10) articles from said input flow with a ratio of the non-diverted articles to the diverted articles which is a function of the ratio of said first number to said second number, by generating a main flow of non-diverted articles (A) to be packaged in the packages of said first type (I) and a derivative flow of diverted articles for packaging into the packages of said second type (II),
wherein the method includes diverting articles from said input flow as single diverted articles (A) separated by a number of non-diverted articles which, at least in the average, is a function of the ratio of said first number to said second number.

2. The method of claim 1, including diverting (10) articles from said input flow with a ratio of the non-diverted articles to the diverted articles which is:
- equal to the ratio of said first number to said second number, or
- a multiple n, with n higher than 1, of the ratio of said first number to said second number.

3. The method of any of claims 1 to 2, including discontinuing said diverting to transfer to said main flow of articles all the articles (A) in said input flow.

4. The method of any of the previous claims, including varying over time the ratio of the diverted articles to the non-diverted articles to permit the variation of said second number of articles.

5. The method of any of the previous claims, wherein said first number is higher of at least one order of magnitude with respect to said second number.

6. The method of any previous claims, wherein said input flow has a rate of at least 800 articles/minute.

7. The method of any of the previous claims, wherein said input flow has a rate of at least 1000 articles/minute.

8. The method of any of the previous claims, wherein said second number is lower than ten.

9. The method of any of the previous claims, wherein said second number is lower than five.

10. The method of any of the previous claims, wherein said second number is equal to one.

11. A system for automatically packaging sanitary articles (A) in packages of at least a first (I) and a second (II) type including a first and a second number of articles, respectively, the system including:
- a packaging station (C1) to package said articles (A) in said first type of packages (I),
- a second packaging station (C2) to package said articles (A) in said second type of package (II), and
- a diverter unit (10) configured to operate according to the method of any of claims 1 to 10 to send said main flow of articles (A) towards said first packaging station (C1) and said derivative flow of articles (A) towards said second packaging station (C2) respectively.

## Patentansprüche

1. Verfahren zum automatischen Verpacken von Sanitärartikel in Packungen von zumindest einem ersten (I) und einem zweiten (II) Typ, die eine erste bzw. eine zweite Anzahl von Artikeln (A) enthalten, wobei das Verfahren Folgendes umfasst:
- Bereitstellen eines Eingangsstroms der Artikel (A),
- Umleiten (10) von Artikeln aus dem Eingangsstrom mit einem Verhältnis der nicht umgeleiteten Artikel zu den umgeleiteten Artikeln, das in Abhängigkeit von dem Verhältnis der ersten Anzahl zu der zweiten Anzahl steht, durch Erzeugen eines Hauptstroms von nicht umgeleiteten Artikeln (A), die in die Packungen des ersten Typs (I) zu verpacken sind, und eines abgeleiteten Stroms von umgeleiteten Artikeln zum Verpacken in die Packungen des zweiten Typs (II),
wobei das Verfahren ein Umleiten von Artikeln aus dem Eingangsstrom als einzelne umgeleitete Artikel (A) umfasst, die durch eine Anzahl von nicht umgeleiteten Artikeln voneinander getrennt sind, die, zumindest im Mittel, in Abhängigkeit von dem Verhältnis der ersten Anzahl zu der zweiten Anzahl steht.

2. Verfahren nach Anspruch 1, umfassend ein Umleiten (10) von Artikeln aus dem Eingangsstrom mit einem Verhältnis der nicht umgeleiteten Artikel zu den umgeleiteten Artikeln, das:
- gleich dem Verhältnis der ersten Anzahl zu der zweiten Anzahl ist oder
- ein Vielfaches n des Verhältnisses der ersten Anzahl zu der zweiten Anzahl ist,
wobei n höher als 1 ist.

3. Verfahren nach einem der Ansprüche 1 bis 2, umfassend ein Unterbrechen des Umleitens, um alle Artikel (A) in dem Eingangsstrom zu dem Hauptstrom von Artikeln weiterzuleiten.

4. Verfahren nach einem der vorangehenden Ansprüche, umfassend ein Variieren des Verhältnisses der umgeleiteten Artikel zu den nicht umgeleiteten Artikeln im Zeitverlauf, um die Variation der zweiten Anzahl von Artikeln zu erlauben.

5. Verfahren nach einem der vorangehenden Ansprüche, wobei die erste Anzahl gegenüber der zweiten Anzahl um zumindest eine Größenordnung höher ist.

6. Verfahren nach einem der vorangehenden Ansprüche, wobei der Eingangsstrom eine Rate von zumindest 800 Artikeln/Minute aufweist.

7. Verfahren nach einem der vorangehenden Ansprüche, wobei der Eingangsstrom eine Rate von zumindest 1000 Artikeln/Minute aufweist.

8. Verfahren nach einem der vorangehenden Ansprüche, wobei die zweite Anzahl niedriger als zehn ist.

9. Verfahren nach einem der vorangehenden Ansprüche, wobei die zweite Anzahl niedriger als fünf ist.

10. Verfahren nach einem der vorangehenden Ansprüche, wobei die zweite Anzahl gleich eins ist.

11. System zum automatischen Verpacken von Hygieneartikeln (A) in Packungen von zumindest einem ersten (I) und einem zweiten (II) Typ, die eine erste bzw. eine zweite Anzahl von Artikeln umfassen, wobei das System Folgendes umfasst:
- eine Verpackungsstation (C1) zum Verpacken der Artikel (A) in den ersten Typ von Packungen (I),
- eine zweite Verpackungsstation (C2) zum Verpacken der Artikel (A) in den zweiten Typ von Packung (II) und
- eine Umleitungseinheit (10), die dazu ausgestaltet ist, gemäß dem Verfahren nach einem der Ansprüche 1 bis 10 zu arbeiten, um den Hauptstrom von Artikeln (A) zur ersten Verpackungsstation (C1) bzw. den abgeleiteten Strom von Artikeln (A) zur zweiten Verpackungsstation (C2) zu senden.

## Revendications

1. Procédé pour emballer automatiquement des articles d'hygiène dans des emballages d'au moins un premier (I) et d'un second (II) type contenant un premier et un second nombre d'articles (A) respectivement, le procédé comprenant les étapes consistant à :
prévoir un flux d'entrée desdits articles (A),
dévier (10) les articles dudit flux d'entrée avec un rapport d'articles non déviés sur articles déviés, qui dépend du rapport dudit premier nombre sur ledit second nombre, en générant un flux principal d'articles non déviés (A) à emballer dans des emballages dudit premier type (I) et un flux de dérivation d'articles déviés destinés à être emballés dans les emballages dudit second type (II),
dans lequel le procédé comprenant l'étape consistant à dévier des articles dudit flux d'entrée en tant qu'articles déviés uniques (A) séparés par un certain nombre d'articles non déviés qui, au moins en moyenne, dépend du rapport dudit premier nombre sur ledit second nombre.

2. Procédé selon la revendication 1, comprenant l'étape consistant à dévier (10) des articles dudit flux d'entrée avec un rapport d'articles non déviés sur articles déviés qui est :
égal au rapport dudit premier nombre sur ledit second nombre, ou
un multiple n, avec n supérieur à 1, du rapport dudit premier nombre sur ledit second nombre.

3. Procédé selon l'une quelconque des revendications 1 ou 2, comprenant l'étape consistant à interrompre ladite déviation pour transférer audit flux principal d'articles, tous les articles (A) dans ledit flux d'entrée.

4. Procédé selon l'une quelconque des revendications précédentes, comprenant l'étape consistant à modifier, avec le temps, le rapport d'articles déviés sur articles non déviés pour permettre la variation dudit second nombre d'articles.

5. Procédé selon l'une quelconque des revendications précédentes, dans lequel ledit premier nombre est supérieur d'au moins un ordre de grandeur par rapport audit second nombre.

6. Procédé selon l'une quelconque des revendications précédentes, dans lequel ledit flux d'entrée a une vitesse d'au moins 800 articles/minute.

7. Procédé selon l'une quelconque des revendications précédentes, dans lequel ledit flux d'entrée a une vitesse d'au moins 1000 articles/minute.

8. Procédé selon l'une quelconque des revendications précédentes, dans lequel ledit second nombre est inférieur à dix.

9. Procédé selon l'une quelconque des revendications précédentes, dans lequel ledit second nombre est inférieur à cinq.

10. Procédé selon l'une quelconque des revendications précédentes, dans lequel ledit second nombre est égal à un.

11. Système pour emballer automatiquement des articles d'hygiène (A) dans des emballages d'au moins un premier (I) et d'un second (II) type comprenant un premier et un second nombre d'articles, respectivement, le système comprenant :
une station d'emballage (C1) pour emballer lesdits articles (A) dans ledit premier type d'emballage (I),
une seconde station d'emballage (C2) pour emballer lesdits articles (A) dans ledit second type d'emballage (II), et
une unité de déviation (10) configurée pour fonctionner selon le procédé selon l'une quelconque des revendications 1 à 10 pour envoyer ledit flux principal d'articles (A) vers ladite première station d'emballage (C1) et ledit flux de dérivation d'articles (A) vers ladite seconde station d'emballage (C2), respectivement.
